# EUROPEAN PATENT APPLICATION

(11) **EP 1 552 988 A2**
(43) Date of publication of application: **13.07.2005**
(21) Application number: 04078513.1
(22) Date of filing: 23.12.2004
(51) Int. Cl.: B60R 21/01

(54) **Infrared proximity sensor for air bag safety**

(30) Priority: 08.01.2004 US 753839
(71) Applicant: Delphi Technologies, Inc., Troy, MI 48007 (US)
(72) Inventor: Griffin, Dennis P., Noblesville, Indiana 46060 (US); Fultz, William W., Camel Indiana 46033 (US)
(74) Representative: Denton, Michael John

(57) **Abstract**

The present invention provides an object proximity sensor system and method to determine the distance between a vehicle occupant, and the system. Once determined, the distance is used in determining whether to enable or disable an air bag (115) in the vehicle. In an exemplary embodiment, the object proximity sensor system includes a light transmitter capable of emitting light beams (116) that illuminate a predefined area and are capable of reflecting off an object positioned in the predefined area, a light receiver capable of detecting the reflected light beams and including an imaging sensor capable of acquiring an image of the object in the illuminated predefined area and capable of distinguishing a plurality of imaged spots in the image, and a microcontroller coupled to the light receiver and operable to determine diameters of the imaged spots. The microcontroller then uses the diameters of the spots to determine the object's distance from the light transmitter.

## Description

### Technical Field

The present invention generally relates to a vehicle occupant safety system, and more particularly, to a vehicle occupant proximity sensor for use with a vehicle occupant safety system.

### Background of the Invention

Vehicle occupant safety systems that are activated in response to a vehicle crash for the purpose of mitigating the vehicle's occupant's injuries are well known in the art. Such systems may include front and side air bags as well as seat belt pretensioners and knee bolsters. An occupant protection system may also include a crash sensor for sensing the occurrence of a vehicle crash and for providing an electrical signal indicative of the crash severity.

The prior art teaches the use of sensors to detect the presence, weight, or seating position of a vehicle occupant. Known occupant protection systems include occupant position sensors that sense the position of a vehicle occupant with respect to an air bag. Such sensors include ultrasonic sensors, infrared sensors, weight sensors and/or capacitive sensors. A microcontroller connected to the sensors controls the air bag in response to the sensed position of the occupant. In response to the sensed occupant position, the deployment of the air bag may be adjusted. For example, if the occupant is positioned in a position such that deploying the air bag will not increase the occupant's chances for protection, it may be desirable to suppress the deployment of the air bag. An occupant who is near the air bag is referred to as being within the air bag deployment zone. The air bag deployment zone varies with different vehicles and air bag deployment schemes. Deploying the air bag for an occupant who is not within the air bag deployment zone may not increase the occupant's chances for protection.

The prior art also teaches the use of infrared beams that reflect off the surface of an object to sense the location of the object's surface. For example, the prior art teaches an infrared beam directed by a transmitter at a point of reflection on the object. A receiver detects the reflected light and measures the distance of the point of reflection from the transmitter based upon a triangulation of the transmitted and received beams for purposes of controlling the activation of an air bag. Other object measurement techniques are also known, including time-of-flight and stereoscopic techniques. Temperature can sometimes cause systems implementing the time-of-flight technique to provide inaccurate measurements. Stereoscopic techniques often require a considerable amount of signal processing, and current designs struggle to reach the response time necessary for air bag deployment decisions. Subsequently, systems implementing these techniques may be costly. For these reasons, a more accurate and less expensive system is needed that determines whether the occupant is within the air bag deployment zone.

### Summary of the Invention

The present invention provides a system and method for establishing the distance from an object proximity sensor to a vehicle occupant by utilizing both fundamental optics equations and the relationship between image magnification and object distance to determine whether the vehicle occupant is within the air bag deployment zone. Such a system and method are necessary to increase the vehicle occupant's chances of protection in a crash situation.

The present invention provides several advantages. One advantage of the present invention is that it monitors the air bag deployment zone in order to improve air bag deployment safety. By determining the distance between the object proximity sensor and a vehicle occupant positioned in the air bag deployment zone, a determination may then be made as to whether an air bag can be safely deployed to decrease the chances of injuring the vehicle occupant.

Another advantage provided by the present invention is that it uses low power infrared light sources that emit light beams which are invisible to the human eye. Because the emitted light beams are operationally safe to the vehicle occupant, the present invention may be constantly used in vehicles to monitor the air bag deployment zone.

In one form, the present invention provides an object proximity sensor system including a light transmitter capable of emitting light beams that illuminate a predefined area and are capable of reflecting off an object positioned in the predefined area; a light receiver capable of detecting the reflected light beams, the light receiver including an image sensor capable of acquiring an image of the object in the illuminated predefined area and capable of distinguishing a plurality of imaged spots in the image; and a microcontroller coupled to the light receiver and operable to determine diameters of the imaged spots and to use the determined diameters to calculate the object's distance from the light transmitter.

In another form, the present invention provides an object proximity sensory system including light detecting means for detecting a plurality of light beams emitted by the light transmitter and reflected off the target, the light detecting means and the light transmitter adapted to be positioned proximate to the air bag module; image capture means for capturing an image of the target in the occupant area, the image containing a plurality of imaged spots produced by the reflected light beams; and means for determining diameters of each of the imaged spots and using the diameters to determine the target's distance from the light transmitter

In still another form, the present invention provides an object proximity sensor, the sensor system including a plurality of light sources for generating a plurality of light beams that illuminate the object positioned in the occupant area; imaging optics for imaging the plurality of light beams on a photosensitive device, the imaged light beams forming reflected imaged spots on the photosensitive device, the imaged spots each having a diameter; an image processor in communication with the imaging optics; and a microcontroller coupled to the imaging optics and the image processor, the microcontroller and the image processor together operable to determine the diameter of the reflected imaged spots, and the microcontroller operable to use the diameters to determine the object's distance.

In yet another form of the present invention, a method of establishing the distance between the light transmitter and a target positioned in the occupant area is provided, the method including the steps of emitting a plurality of light beams, the light beams illuminating the occupant area and capable of reflecting off the target; acquiring an image of the target in the occupant area, the image including a plurality of imaged spots produced by the reflected light beams, each of the imaged spots having a diameter; determining the diameters of each of the imaged spots; and determining the distance of the target from the light transmitter based upon the diameters of the plurality of imaged spots.

### Brief Description of the Drawings

The above-mentioned and other features and objects of this invention, and the manner of attaining them, will become more apparent and the invention itself will be better understood by reference to the following description of embodiments of the invention taken in conjunction with the accompanying drawings, wherein:
Figure 1 illustrates the occupant area of a motor vehicle equipped with an air bag and the object proximity sensor system of the present invention;
Figure 2 is a diagrammatic view of the object proximity sensor system of the present invention;
Figure 3 illustrates a flowchart describing a method of use of the object proximity sensor;
Figure 4 is a diagrammatic view of one embodiment of the object proximity sensor system of the present invention;
Figure 5 is a schematic view of the embodiment of the object proximity sensor illustrated in Figure 4;
Figure 6A illustrates an image acquired by the object proximity sensor of the present invention when the target is at a first distance from the object proximity sensor;
Figure 6B illustrates an image acquired by the object proximity sensor of the present invention when the target is at a second distance from the object proximity sensor; and
Figure 7 shows the theoretical magnification of the reflected spots as the target approaches the object proximity sensor.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention in several forms and such exemplification is not to be construed as limiting the scope of the invention in any manner.

### Description of the Preferred Embodiment

The embodiments disclosed below are not intended to be exhaustive or limit the invention to the precise forms disclosed in the following detailed description. Rather, the embodiments are chosen and described so that others skilled in the art may utilize their teachings.

The present invention provides a system and method for determining the location of a vehicle occupant, for example, whether automobile vehicle occupants are within an air bag deployment zone. As described above, the air bag deployment zone varies with different vehicles and different air bag deployment schemes. Generally, a safe air bag deployment area is considered to be a hemisphere with a minor radius of 200 to 300 millimeters directly in front of the air bag door. However, a safe air bag deployment zone is determined in accordance to the specifications of the vehicles in which the air bags are implemented. As will be described below, the object proximity sensor of the present invention monitors this hemisphere to determine whether the occupant's distance from the air bag door is within the safe deployment area.

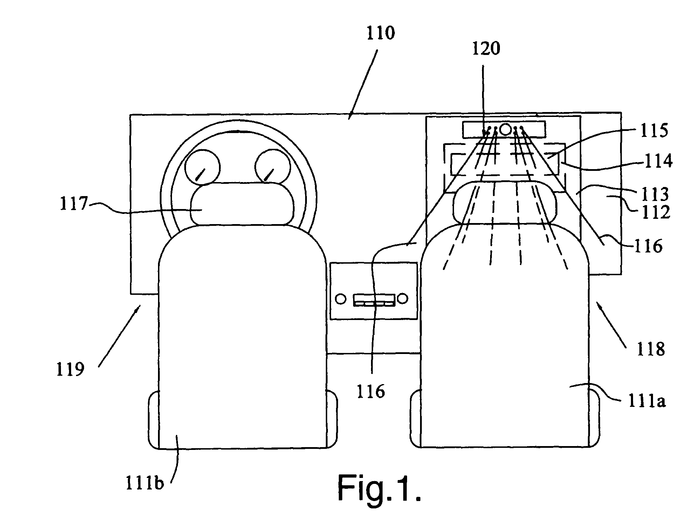

Shown in Fig. 1 is the interior of motor vehicle 110. To protect motor vehicle's 110 occupants in a crash situation, vehicle 110 includes vehicle occupant protection device 113. In an exemplary embodiment of the present invention, vehicle occupant protection device 113 is an inflatable restraint module that includes an inflatable restraint such as air bag 115. Air bag 115 is inflatable within occupant area 118 in front of an occupant seated in vehicle seat 111a. Protection device 113 will be hereinafter referred to as air bag module 113. In other embodiments of the present invention, air bag module 113 may be contained within steering wheel 117 so as to provide inflatable air bag 115 within occupant area 119 and in front of a vehicle occupant seat in vehicle seat 111b. Air bag module 113 is contained within dashboard 112 of vehicle 110 behind air bag door 114.

Object proximity sensor ("OPS") system 120 is illustrated in Fig. 1 as well. OPS system 120 is positioned on dashboard 112 proximate to air bag module 113. In an exemplary embodiment of the present invention, OPS system 120 is integrated with air bag door 114. In other embodiments of the present invention, OPS system 120 may be positioned adjacent to air bag door 114 or at other locations in which a direct line of sight is available between OPS system 120 and the vehicle occupant.

As will be described in detail below, OPS system 120 interacts with air bag module 113 by using light beams 116 to monitor occupant area 118 where an occupant may be positioned, and based on the distance of the occupant from OPS system 120, producing a control signal to either inhibit or enable deployment of air bag 115 in response to a crash event of sufficient severity. Air bag module 113 may be adjusted to enable or inhibit the deployment of air bag 115. The criteria concerning whether to enable or inhibit deployment of air bag 115 are outside the scope of this invention and are generally defined either by the manufacturer of vehicle 110 or by government regulations. In general, however, the deployment of air bag 115 should be disabled if seat 111 a is unoccupied, or occupied by a front facing infant seat ("FFIS"), a rear facing infant seat ("RFIS"), or by an out-of-position ("OOP") adult or small child, where the term "out-of-position" is defined by a predetermined proximity of the occupant's head or torso to the point of deployment of air bag 115. Accordingly, the objective of OPS system 120 is to determine the proximity of an occupant seated in vehicle seat 111a to OPS system 120.

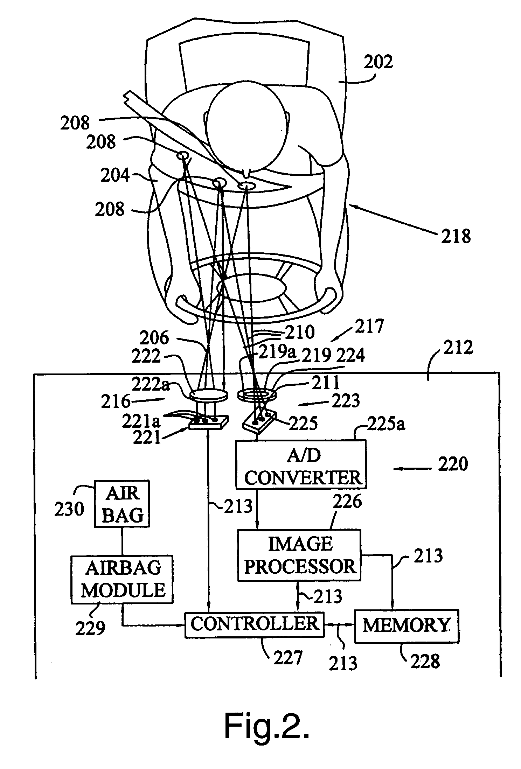

Now referring to Fig. 2, control of air bag module 229, i.e., to enable or inhibit deployment of air bag 230, is accomplished by controller 227. Controller 227 receives sensory input from one or more sensors and uses the input to determine which control signals to provide to air bag module 229. Controller 227 includes a processor and is associated with memory 228, each of which are used by OPS system 220 in determining the distance between target 204 and OPS system 220.

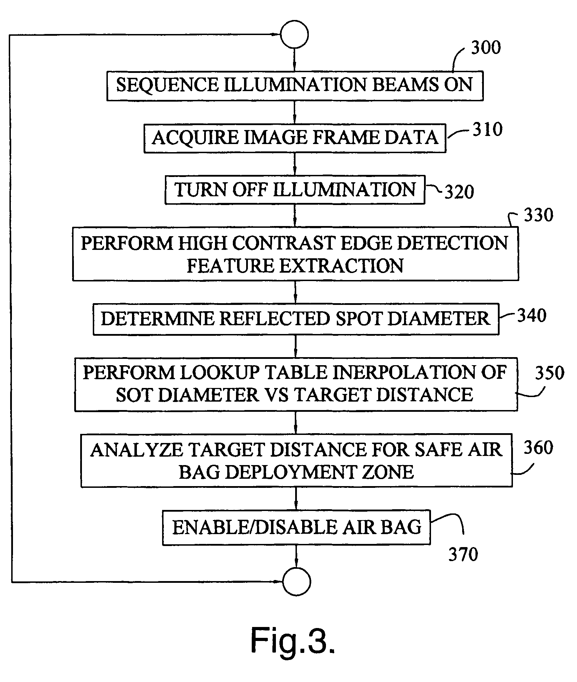

One of the sensory input sources for controller 227 is OPS system 220. OPS system 220 and its method of use will be explained by reference to Figs. 2 and 3. OPS system 220 is positioned proximate to air bag module 229, which is located within dashboard 212. System 220 includes light emitter 221, which is coupled to controller 227 by communication bus 213 and contains multiple light sources 221a that, when activated (step 300 of Fig. 3), emit infrared ("IR") light beams 206 to illuminate occupant area 218 between OPS system 220 and vehicle seat 202. In order to accommodate different vehicle platforms, the number and placement of light sources 221 a, as well as the illumination pattern and directivity of light beams 206, may be altered according to the specifications of the vehicle in which OPS system 220 is implemented. Additionally, numerous known algorithms may be deployed to tailor the shape of the air bag deployment zone and/or the prioritization of specific areas within the deployment zone to be illuminated. Emitter 221 also includes lens system 216, which may include aspheric element 222a for concentrating light beams 206 and convex lens 222 for focusing light beams 206 on vehicle occupant, or target, 204. Light beams 206 are directed towards occupant area 218 in a manner to provide sufficient coverage of the air bag deployment zone. Light beams 206 illuminate spots 208 on vehicle target 204 and are reflected as reflected light beams 210.

OPS system 220 also includes a light receiver. In an exemplary embodiment of the present invention, the light receiver includes imaging sensor 223 used to acquire images. Imaging sensor 223 may include, for example, complementary metal oxide semiconductor ("CMOS") image sensors and charge-coupled device ("CCD") image sensors. Such sensors are manufactured by Eastman Kodak Company of New Jersey. Imaging sensor 223 includes lens system 217, which may include IR filter 219, aspheric element 219a for imaging reflected light beams 210 to produce imaged spots 211, and convex lens 224 for focusing and magnifying imaged spots 211 onto photosensitive device 225.

Using known image processing techniques, which will not be described in detail herein, imaging sensor 223 acquires an image of occupant area 218 (step 310). Photosensitive device 225 includes multiple photodiodes that convert light to electrons. The number of electrons produced is a function of the wavelength and the intensity of reflected light beams 210 striking photosensitive device 225. Electrons are collected in a holding region (not shown) until light sources 221a are inactivated and the illumination period is finished (step 320), upon which time reflected light beams 210 are either converted into a voltage (e.g., CMOS processors) or transferred to a metering register (e.g., CCD sensors) and subsequently converted to a voltage. The measured voltage is passed through analog-to-digital converter circuitry 225a of photosensitive device 225, which then forms a digital electronic representation of the scene imaged by imaging sensor 223.

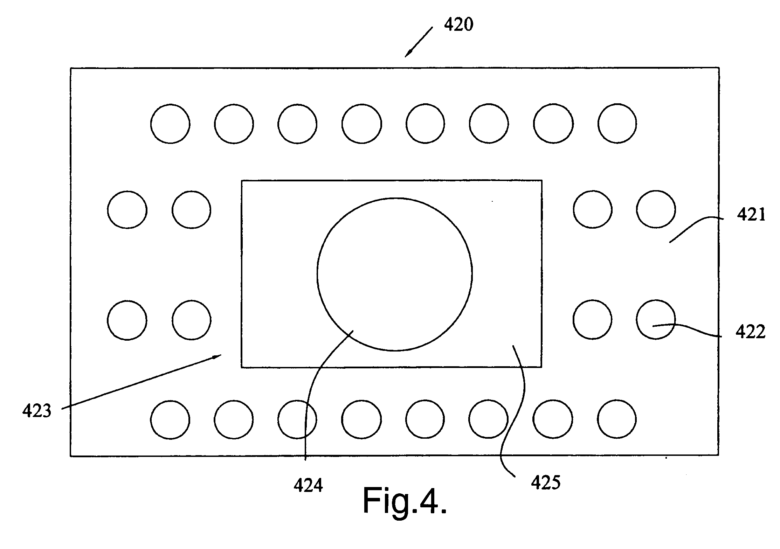

One embodiment of OPS system 420 is shown in Fig. 4. In this embodiment, image sensor 423 is integrated with light sources 422. Light emitter 421 contains a plurality of light sources 422, which surround image sensor 423. In an exemplary embodiment of the present invention, light sources 422 are arranged in a collimated array. Light sources 422 may include, for example, infrared light sources and/or sensor light sources. Image sensor 423 includes focusing lens 424 and photodiode 425, upon which reflected spots 211 (Fig. 2) produced by reflected light beams 210 are imaged. Image sensor 423 may be capable of capturing images at a rate of anywhere between 30 to 1000 frames per second. In other embodiments of the present invention, light sources 422 may be arranged in a different relationship with respect to image sensor 423, and image sensor 423 and light emitter 421 may be positioned separately on dashboard 212 of the vehicle.

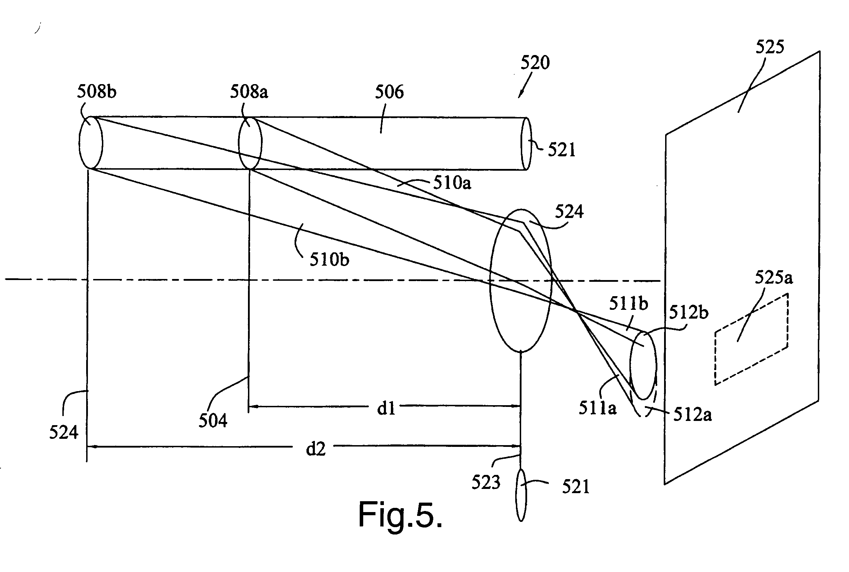

The object proximity sensor of Fig. 4 is schematically shown in Fig. 5. For the purpose of describing Fig. 5, object proximity sensor system 520 is positioned in object proximity sensor system plane 523 and includes light sources 521 and focusing lens 524. Light sources 521 are positioned proximately to and above and below lens 524 and may emit infrared light beams 506. When light beam 506 hits target 504, which is a first distance ("D1") away from object proximity sensor plane 523, it illuminates spot 508a and light beam 510a reflects off target 504 and is magnified by lens 504 onto a photodiode (not shown) positioned in photodiode plane 525. Magnified reflected light beam 511a forms magnified imaged spot 512a on the photodiode. The diameter of imaged spot 512a can then be determined to find out D1.

Similarly, when light beam 506 emitted from light source 521 hits target 524, which is a second distance ("D2") away from object proximity sensor system plane 523, it creates illumination spot 508b and then reflects off target 524 and is magnified by lens 524 onto a photodiode 525a positioned in photodiode plane 525. Magnified reflected light beam 511b forms magnified imaged spot 512b on the photodiode. The diameter of imaged spot 512b may then be determined to find out D2.

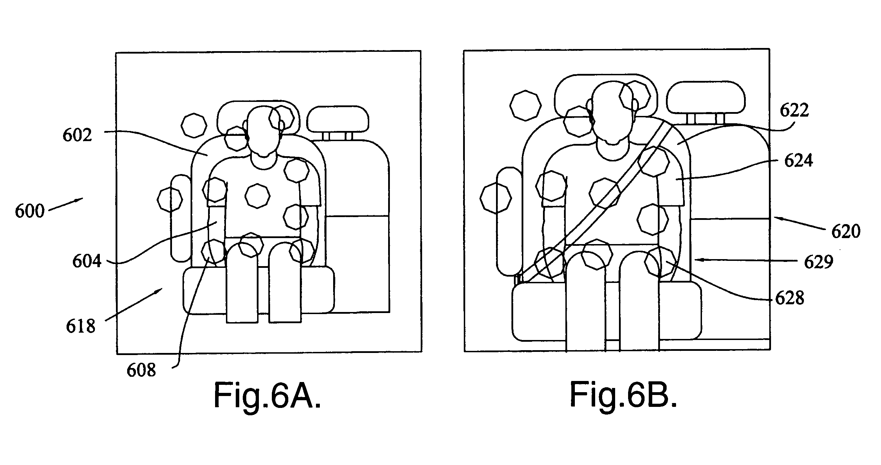

Referring back to Fig. 2, communication bus 213 couples photosensitive device 225 to image processor 226. The image captured by imaging sensor 223 is output as video signals to image processor 226 and subsequently processed. In an exemplary embodiment of the present invention, image processor 226 is an Application Specific Integrated Circuit ("ASIC"). The images displayed in Figs 6A and 6B are illustrative of the images captured by imaging sensor 223 and processed by image processor 226.

Image 600 is illustrated in Fig. 6A. Image 600 displays occupant area 618 of a vehicle that is captured in image 600 by an imaging sensor. Image 600 portrays vehicle occupant 604 sitting in vehicle seat 602. Imaged spots 600 also appear on image 600. Imaged spots 608 are the spots produced by light beams that are (1) emitted by a light emitter's plurality of light sources to illuminate the air bag deployment zone of occupant area 618, (2) reflected off of either occupant 604, seat 602 or other object in the occupant area; and (3) received and captured by an imaging sensor to render image 600. The size of imaged spots 608 on image 600 is a function of the non-linear magnification of the imaging sensor's lens system, or optics. Accordingly, the distance of occupant 604 from the imaging sensor may be directly determined from the relative change in the magnification of imaged spots 608. Because the relationship between the size of imaged spots 608 and occupant's 604 distance is a fundamental aspect of optics, as long as the sizes of imaged spots 608 are known, the distance between occupant 604 and the imaging sensor can be determined.. As is known in the art, the relationship between size and distance can be expressed using the following standard mathematic equations:
**m = -q/p = (-q/f + 1)** such that
**image diameter = m**_{**p**} *** (2r + (2p * tan (Θ)))**
where **p = object distance, q = image distance, f = focal length of lens, m = optics magnification, Θ = illumination source beam angle and r = illumination source radius.**

Due to target shape, location, and other variables, imaged spots 608 may be distorted and, hence, not a perfect circle. Therefore, in order to ascertain an accurate diameter for imaged spots 608 so that the distance of occupant 604 from the imaging sensor may be determined, it may be necessary to compensate for the distortion by performing image processing functions on image 600. Well known processing operations in the art of digital image processing may be performed on image 600 to more clearly determine the edges of imaged spots 608 for measurement, including, but not limited to, image feature extraction (step 330), the Sobel operator for edge enhancement, and filtering to remove noise from image 500. Image processor 226 (Fig. 2) may be capable of executing a set of preprogrammed instructions (perhaps stored in memory 228) necessary to process image 600. For example, image processor 226 may be programmed to carry out a feature extraction technique. After receiving image 600 (Fig. 5), image processor 226, using known algorithms and methods, may extract a feature set from image 600 to pixel accuracy. The feature set may be the outlines or edges of imaged spots 608. Image processor 226 may then transmit this data to controller 227 for use in calculating the diameters of each imaged spot 608 (step 340).

In another example, image processor 226 may include a known edge extracting device which performs a filtering treatment to image 600 that may use a spatial filter to emphasize, or extract, pixels from image 600 whose brightness steeply changes. Consequently, the edges of imaged spots 608 may be more clearly obtained, and the diameters of imaged spots 608 more easily determined.

Memory 228 of OPS system 220 may be used to store look-up tables containing calculated data that shows the relationship between the diameters of imaged spots 608 and the distance that vehicle occupant 604 is from light emitter 221. The data in the look-up tables may be adjusted for various application parameters, e.g., actual lens magnification versus theoretical lens magnification, actual light source angle and location versus theoretical light source angle and location, etc. The image sensor is calibrated before use so that these adjustments may be made. As an example, a look-up table may contain a plurality of spot diameter data values, e.g., 2 mm, 4 mm, 6 mm, ... , 10 mm, etc. The look-up table may also contain a plurality of vehicle occupant distance data values, e.g., 400 mm, 390 mm, 380 mm, ... , 100 mm, etc. Each of the spot diameter data values may correspond to a vehicle occupant distance data value. This relationship may be shown in terms of a relative diameter and pixels. For example, imaging sensor 223 may be a 640 X 480 pixel device that is 5 mm x 4 mm and has 7.5 um x 7.5 um pixels. Accordingly, if the vehicle occupant distance data value is 100 mm (i.e., target 204 is 100 mm from light emitter 221), the spot diameter data value is 100 pixels. If the vehicle occupant distance data value is 200 mm, the spot diameter data vale is 50 pixels. At 300 mm, the spot diameter data value is 33 pixels, and if the vehicle occupant distance data value is 400 mm, the spot diameter data value is 25 pixels. In this fashion, given the diameter of any imaged spot 608, the look-up table may be used to predict the distance that vehicle occupant 604 is from light emitter 221.

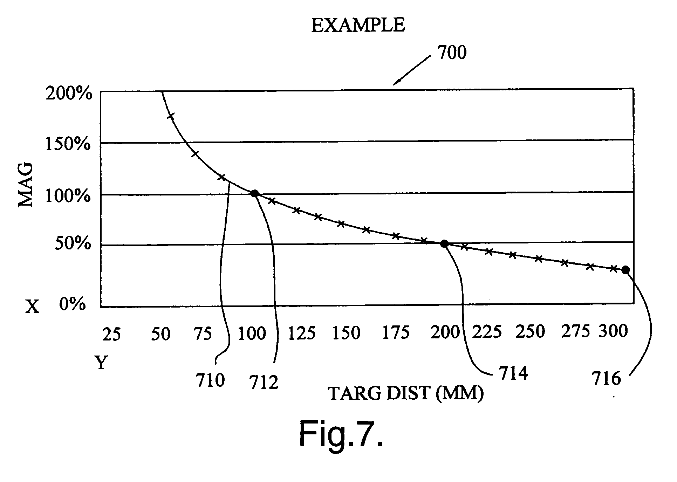

This predictability is substantiated by chart 700 shown in Fig. 7, which depicts the theoretical magnification of IR light beams that reflect off vehicle occupant 604 as occupant 604 moves closer to the imaging sensor. In the illustrated example of Fig. 7, theoretical curve 710 indicates that as the distance between vehicle occupant 604 and the imaging sensor decreases, the magnification of imaged spots 608 increases. In order to test the predictability of theoretical curve 710, data points 712, 714, 716 were measured in a lab environment using an IR light emitting source and an imaging sensor. The imaged spots produced in the images captured by the image sensor were viewed with a commercial photo editor so that the diameters of the imaged spots could be measured. As may be seen in Fig. 7, for each of data points 712, 714, 716, the magnification of the size of the imaged spots matched theoretical curve 710 very closely. The difference in the magnification of the imaged spots is illustrated by the comparison of Figs. 6A and 6B. In Fig. 6A, image 600 was captured when occupant 604 was positioned farther from the imaging sensor than occupant 624 was positioned in image 620 of Fig. 6B. Accordingly, as is predicted by theoretical curve 710 of Fig. 7, the magnification of imaged spots 608 is smaller in image 600 of Fig. 6A than is the magnification of imaged spots 628 in image 620 of Fig. 6B.

Referring again to Fig. 2, based on the above described principles, controller 227 interpolates the look-up table stored in memory 228 to determine distance D between vehicle target 204 and light emitter 221 (step 350 of Fig. 3). The determination of distance D is done at the frame rate of imaging sensor 223 and provides a high response rate to any movement of target 204. Once distance D has been determined, controller 227 may execute preprogrammed instructions to determine whether vehicle occupant 604 is within the vehicle's safe air bag deployment zone. Base on the position of vehicle occupant 604, controller 227 can determine whether to enable/disable air bag 230 (step 370).

Before making the determination to enable/disable air bag 230, however, it may first be necessary for controller 227 to analyze distance D as the distance is calculated in order to interpret target 204 and classify target 204 in seat 202 as a FFIS, a RFIS, an OOP small child or an adult, or an unoccupied seat. Upon classification of target 204, tracking and OOP testing may be performed as well. In general, the tracking function involves identifying the head/torso portion of target 204 (if target 204 is classified as a child or an adult) based on distance D, identifying a grouping of light beams 206 corresponding to that portion, and updating distance D using the identified grouping of light beams 206 at a very fast rate so that the position of the head/torso can be tracked relative to a predefined OOP threshold, i.e., a predefined distance from the point of deployment of air bag 230. Known methods of target classification, tracking and OOP may be found in the art. Specifically, Griffin et al. U.S. Patent No. 6,298,311, paragraph 8, line 51, through paragraph 11, line 27, which is herein incorporated by reference, describes software that may be executed by controller 227 to analyze distance D and perform classification, tracking and OOP testing functions. Additionally, other target interpretation techniques commonly used in the art may be performed as well, including, for example, a rule as simple as: if a specific number of adjacent light beams are within the 300 mm range, then the occupant is considered to be in the deployment range of the air bag. The implementation of such a rule would help to eliminate "false" deployment conditions, e.g., a moving hand, while capturing the "true" condition of an occupant being too close to an air bag for the safe deployment of the air bag.

While this invention has been described as having an exemplary design, the present invention may be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains.

## Claims

1. An object proximity sensor system for use in a motor vehicle having an occupant area (118, 218) defining an air bag deployment zone, and an air bag module (113), said object proximity sensor system **characterized by**: a light transmitter (221, 421) capable of emitting light beams (116, 206, 506) that illuminate a predefined area and are capable of reflecting off an object (204, 604, 624) positioned in the predefined area; a light receiver capable of detecting the reflected light beams, said light receiver comprising an image sensor (223) capable of acquiring an image of the object in the illuminated predefined area and capable of distinguishing a plurality of imaged spots (211, 512a, 608, 628) in the image; and a microcontroller (227) coupled to said light receiver and operable to determine diameters of the imaged spots and to use the determined diameters to calculate the object's distance from said light transmitter.

2. The object proximity sensor system of claim 1 further **characterized by** an image processor (226) coupled to said image sensor for processing the image, said image processor operable with said microcontroller to determine the diameters of the imaged spots.

3. The object proximity sensor system of claim 2 **characterized in that** said object proximity sensor further comprises memory (228) coupled to said microcontroller, said memory storing a look-up table containing imaged spot diameter data and object distance data.

4. The object proximity sensor system of claim 3 **characterized in that** said microcontroller determines the object's distance from said look-up table based upon the diameters of the imaged spots.

5. The object proximity sensor system of claim 4 **characterized in that** said microcontroller determines whether the object is within the airbag deployment zone based on the object's distance from said light transmitter.

6. The object proximity sensor system of claim 1 **characterized in that** said light transmitter includes a plurality of light emitters (221a, 422, 521).

7. The object proximity sensor system of claim 6 **characterized in that** said plurality of light emitters include infrared light sources.

8. The object proximity sensor of claim 2 characterize in that said image processor is operable to remove noise from and perform feature extraction on said image.

9. In a motor vehicle having an occupant area (118, 218) defining an air bag deployment zone, and an air bag module (113), a method of establishing the distance between a light transmitter (221, 421) and a target (204, 604, 624) positioned in the occupant area, said method **characterized by**: emitting a plurality of light beams (116, 206, 506), said light beams illuminating the occupant area and capable of reflecting off the target; acquiring an image of the target in the occupant area, said image including a plurality of imaged spots (211, 608, 628) produced by said reflected light beams, each of said imaged spots having a diameter; determining the diameters of each said imaged spots; and determining the distance of the target from the light transmitter based upon the diameters of said plurality of imaged spots.

10. The method of claim 9 **characterized in that** said step of determining the diameters of each said imaged spot includes a step of removing noise from said image.

11. The method of claim 9 **characterized in that** said step of determining the diameters of each said imaged spot includes a step of performing feature extraction on said image.

12. The method of claim 9 **characterized in that** said step of determining the distance includes a step of storing a look-up table containing imaged spot diameter data and object distance data.

13. The method of claim 12 **characterized in that** said step of determining the distance includes a step of selecting the distance from said look-up table based on the diameters of said imaged spots.

14. The method of claim 9 further **characterized by** a step of determining whether said target is positioned within the air bag deployment zone based on the target's distance from the light transmitter.

15. The method of claim 14 further **characterized by** a step of one of enabling the air bag module if the target is determined to be positioned within the air bag deployment zone and disabling the air bag module if the target is determined not to be in the air bag deployment zone.

16. An object proximity sensor for use in a motor vehicle having an occupant area defining an air bag deployment zone, and an air bag module (113), the object proximity sensor for use in determining the distance between a light transmitter (221, 421) and a target (204, 604, 624) positioned in the occupant area, the object proximity sensor **characterized by**: light detecting means (225, 425) for detecting a plurality of light beams (116, 206, 506) emitted by the light transmitter and reflected off the target, said light detecting means and the light transmitter adapted to be positioned proximate to the air bag module; image capture means (223) for capturing an image (600, 620) of the target in the occupant area, said image containing a plurality of imaged spots (211, 512a, 608, 628) produced by said reflected light beams; and means (226, 227) for determining diameters of each of said imaged spots and using the diameters to determine the target's distance from the light transmitter.

17. The object proximity sensor of claim 16 **characterized in that** said light detecting means includes a photodiode (425).

18. The object proximity sensor of claim 16 **characterized in that** said image capture means includes a charge-coupled device.

19. The object proximity sensor of claim 16 **characterized in that** said image capture means includes a complementary metal oxide semiconductor.

20. The object proximity sensor of claim 16 **characterized in that** said means for determining includes a microprocessor (227).

21. The object proximity sensor of claim 20 **characterized in that** said means for determining also includes an image processor (226) coupled to said image capture means, said image processor operable to remove noise from and perform feature extraction on said image.

22. The object proximity sensor of claim 16 further **characterized by** storage means (228) coupled to said means for determining, said storage means storing a look-up table containing imaged spot diameter data and target distance data.

23. The object proximity sensor of claim 22 **characterized in that** said determining means selects the target's distance from said look-up table based upon the diameters of said imaged spots.

24. An object proximity sensor system for use in a motor vehicle having an occupant area defining an air bag deployment zone, the sensor system for determining the distance from an object (204, 604, 624), said sensor system **characterized by**: a plurality of light sources (221a, 422, 521) for generating a plurality of light beams (116, 206, 506) that illuminate the object positioned in the occupant area; imaging optics (217, 219) for imaging the plurality of light beams on a photosensitive device (225, 425), said imaged light beams forming reflected imaged spots (211, 512a, 608, 628) on said photosensitive device, said imaged spots each having a diameter; an image processor (226) in electrical communication with said imaging optics; and a microcontroller (227) coupled to said imaging optics and said image processor, said microcontroller and said image processor together operable to determine the diameter of said reflected imaged spots, and said microcontroller operable to use the diameters to determine the object's distance.

25. The object proximity sensor of claim 24 **characterized in that** said photosensitive device includes a photodiode.

26. The object proximity sensor of claim 25 further **characterized by** memory (228) coupled to said microcontroller, said memory including a look-up table containing imaged spot diameter data and object distance data.

27. The object proximity sensor of claim 26 **characterized in that** said microcontroller selects the object's distance from the look-up table based on the diameters of said spots.

28. The object proximity sensor of claim 24 **characterized in that** said light sources are arranged in a collimated array.

29. The method of claim 9 further **characterized by** a step of determining whether said target is positioned within the air bag deployment zone based on whether a predetermined number of imaged spots is within a predetermined range.
